# EUROPEAN PATENT APPLICATION

(11) **EP 3 520 933 A1**
(43) Date of publication of application: **07.08.2019**
(21) Application number: 17855592.6
(22) Date of filing: 04.09.2017
(51) Int. Cl.: B22F 9/26

(54) **NICKEL POWDER MANUFACTURING METHOD**

(30) Priority: 27.09.2016 JP 2016187803; 24.10.2016 JP 2016208091
(71) Applicant: Sumitomo Metal Mining Co., Ltd., Tokyo 105-8716 (JP)
(72) Inventor: TAKAISHI Kazuyuki, Niihama-shi Ehime 792-0002 (JP); OZAKI Yoshitomo, Niihama-shi Ehime 792-0002 (JP); HEGURI Shin-ichi, Niihama-shi Ehime 792-0002 (JP); YAMAGUMA Ryo-ma, Niihama-shi Ehime 792-0002 (JP); DOI Yasuo, Niihama-shi Ehime 792-0002 (JP)
(74) Representative: Jones, Nicholas Andrew
(86) International application number: PCT/JP2017/031757
(87) International publication number: WO 2018/061634

(57) **Abstract**

Provided is a nickel powder manufacturing method capable of efficiently manufacturing a high-quality nickel powder using as little ammonium gas or ammonium water as possible. The nickel powder manufacturing method according to the present invention is characterized by comprising: a first step for generating a post-neutralization slurry including nickel hydroxide by mixing a nickel sulfate aqueous solution and a neutralizing agent; a second step for causing a complex-forming reaction by mixing an ammonium sulfate aqueous solution with the post-neutralization slurry and obtaining a post-complexation slurry including a nickel ammine complex aqueous solution; and a reducing step for obtaining a nickel powder and a post-reduction solution by contacting hydrogen gas with the nickel ammine complex aqueous solution. Further, it is preferable that a post-complexation solution obtained in the reduction step be repeatedly used as the ammonium sulfate aqueous solution to be added to the post-neutralization slurry.

## Description

### TECHNICAL FIELD

The present invention relates to a nickel powder manufacturing method, and relates to a method for manufacturing nickel powder by obtaining a nickel ammine complex aqueous solution from nickel hydroxide and then subjecting the nickel ammine complex aqueous solution to a hydrogen reduction treatment.

### BACKGROUND ART

A nickel ammine complex aqueous solution can be used as a useful raw material, for example, by subjecting the nickel ammine complex aqueous solution to hydrogen reduction, fine nickel powder can be obtained as disclosed in Patent Document 1. Such a nickel ammine complex aqueous solution can be obtained, for example, using ammonia gas or ammonia water in a nickel sulfate aqueous solution.

In the method in which nickel powder is obtained by using, as a raw material, a nickel ammine complex aqueous solution obtained from ammonia gas or ammonia water and subjecting the nickel ammine complex aqueous solution to hydrogen reduction, sulfate radical generated simultaneously with the nickel powder is bonded to ammonia to generate an ammonium sulfate aqueous solution. Therefore, if the sulfate radical of the generated ammonium sulfate aqueous solution is not discharged outside the system, a problem arises in that the balance of the liquid in the reaction system is not achieved or the sulfur grade of the nickel powder as a product increases.

As the method of carrying out the sulfate radical outside the system, in the related art, there is known a method of separating and carrying out the sulfate radical as crystal powder of ammonium sulfate using a crystallization method and newly adding ammonia to a reaction liquid, or a method of adding a neutralizing agent such as slaked lime or sodium hydroxide to an ammonium sulfate aqueous solution to generate ammonia water, gypsum, and a salt cake (sodium sulfate hydrate), discharging the sulfate radical outside the system in the form of gypsum and a salt cake, and recycling ammonia water in the system.

However, upon using those methods, problems arise in that investment for facilities increases, and risk to natural environment or working environment caused by ammonia that is a malodorous substance increases. Further, time and effort and cost for treating discharged water containing ammonia to be generated are not negligible.

For this reason, a method is demanded in which a nickel ammine complex aqueous solution is manufactured while the amount of ammonia used is reduced as much as possible and nickel powder is manufactured using the nickel ammine complex aqueous solution.

Patent Document 1: Japanese Unexamined Patent Application, Publication No. 2000-063916

### DISCLOSURE OF THE INVENTION

### Problems to be Solved by the Invention

The present invention is proposed in view of such circumstances, and an object thereof is to provide a nickel powder manufacturing method by which a high-quality nickel powder can be efficiently manufactured using as little ammonia gas or ammonia water as possible.

### Means for Solving the Problems

The present inventors have conducted intensive studies in order to solve the aforementioned problems. As a result, they have found that by using an ammonium sulfate aqueous solution when a nickel ammine complex is obtained from nickel hydroxide, a high-quality nickel powder can be efficiently obtained while the amount of ammonia used is suppressed to the minimum, thereby completing the present invention. Specifically, the present invention provides the followings.
(1) A first invention of the present invention is a nickel powder manufacturing method, the method including: a first step for generating a post-neutralization slurry containing nickel hydroxide by mixing a nickel sulfate aqueous solution and a neutralizing agent; a second step for causing a complex-forming reaction by mixing an ammonium sulfate aqueous solution with the post-neutralization slurry obtained in the first step and obtaining a post-complexation slurry containing a nickel ammine complex aqueous solution; and a reduction step for obtaining nickel powder and a post-reduction solution by bringing hydrogen gas into contact with the nickel ammine complex aqueous solution obtained in the second step.
(2) A second invention of the present invention is the nickel powder manufacturing method in the first invention, in which in the second step, the post-reduction solution obtained in the reduction step is used as the ammonium sulfate aqueous solution to be mixed with the post-neutralization slurry.
(3) A third invention of the present invention is the nickel powder manufacturing method in the first or second invention, the method further including a third step for subjecting the post-complexation slurry obtained in the second step to solid-liquid separation into a nickel ammine complex aqueous solution and a post-complexation sediment and supplying the nickel ammine complex aqueous solution to the reduction step.
(4) A fourth invention of the present invention is the nickel powder manufacturing method in any one of the first to third inventions, in which in the first step, slaked lime and/or sodium hydroxide is used as the neutralizing agent.
(5) A fifth invention of the present invention is the nickel powder manufacturing method in any one of the first to fourth inventions, in which in the reduction step, the nickel powder is obtained by adding ammonia water to the nickel ammine complex aqueous solution and then bringing the hydrogen gas into contact with the nickel ammine complex aqueous solution.

### Effects of the Invention

According to the present invention, a high-quality nickel powder can be efficiently manufactured with the amount of ammonia used being suppressed to the minimum, and productivity can be improved in terms of environment and cost.

### BRIEF DESCRIPTION OF THE DRAWINGS

Fig. 1 is a flow diagram illustrating an example of a flow of a nickel powder manufacturing method.
Fig. 2 is a flow diagram illustrating a flow of the nickel powder manufacturing method when ammonia water is added in a reduction step.

### PREFERRED MODE FOR CARRYING OUT THE INVENTION

Hereinafter, a specific embodiment of the present invention will be described in detail. Incidentally, the present invention is not limited to the following embodiment, and various modifications can be made within the range that does not change the spirit of the present invention.

The nickel powder manufacturing method according to the present invention is a method for manufacturing nickel powder by adding a neutralizing agent to a nickel sulfate aqueous solution to generate nickel hydroxide, obtaining an aqueous solution of a nickel ammine complex from the nickel hydroxide, and then subjecting the nickel ammine complex to hydrogen reduction.

At this time, in the nickel powder manufacturing method according to the present invention, it is characterized in that when a nickel ammine complex is obtained from nickel hydroxide, a complex-forming reaction of nickel is generated using an ammonium sulfate aqueous solution.

Specifically, this nickel powder manufacturing method includes: a first step for generating a post-neutralization slurry containing nickel hydroxide by mixing a nickel sulfate aqueous solution and a neutralizing agent; a second step for causing a complex-forming reaction by mixing an ammonium sulfate aqueous solution with the post-neutralization slurry and obtaining a post-complexation slurry containing a nickel ammine complex aqueous solution; and a reduction step for obtaining nickel powder and a post-reduction solution by bringing hydrogen gas into contact with the nickel ammine complex aqueous solution.

Further, as the ammonium sulfate aqueous solution used when a nickel ammine complex is formed, it is preferable to use an ammonium sulfate aqueous solution generated by subjecting the nickel ammine complex to hydrogen reduction in the reduction step. In this way, by repeatedly using the ammonium sulfate aqueous solution obtained by the treatment in the reduction step in the reaction of forming a nickel ammine complex in the second step, nickel powder can be more efficiently manufactured.

In this way, by the nickel powder manufacturing method according to the present invention, a high-quality nickel powder can be manufactured while the amount of ammonium used is suppressed to the minimum as compared to the related art. Moreover, by forming a nickel ammine complex repeatedly using the ammonium sulfate aqueous solution obtained in the reduction step, nickel powder can be manufactured on the basis of the treatment that is effective in terms of cost and industrial aspect.

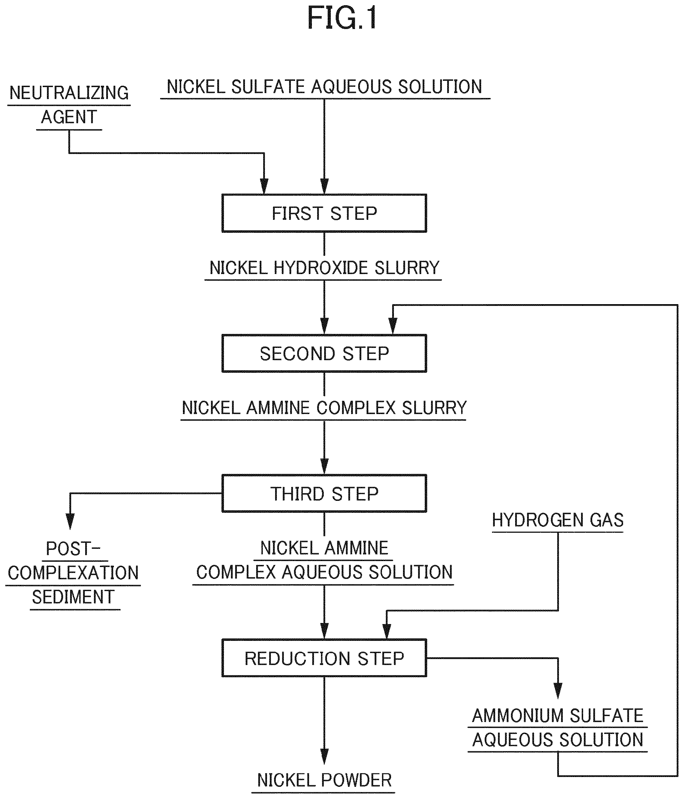

Hereinafter, the nickel powder manufacturing method according to the present invention will be described in more detail. Fig. 1 is a flow diagram illustrating an example of a flow of a nickel powder manufacturing method.

As illustrated in Fig. 1, the nickel powder manufacturing method according to the present embodiment includes: a first step for generating nickel hydroxide by adding a neutralizing agent to a nickel sulfate aqueous solution; a second step for forming a nickel ammine complex from the nickel hydroxide; a third step for solid-liquid separating a nickel ammine complex aqueous solution from the obtained slurry; and a reduction step for generating nickel powder by subjecting the nickel ammine complex aqueous solution to hydrogen reduction.

### [First Step]

In the first step, a post-neutralization slurry containing nickel hydroxide is generated by mixing a nickel sulfate aqueous solution and a neutralizing agent. Incidentally, the post-neutralization slurry is, for example, a slurry obtained by mixing nickel hydroxide and a gypsum slurry in the case of using slaked lime as a neutralizing agent and a slurry of nickel hydroxide in the case of using sodium hydroxide as a neutralizing agent.

Specifically, in the first step, a certain amount of the nickel sulfate aqueous solution is charged, for example, in a neutralization reaction tank and a neutralizing agent is added thereto, so that the pH of the nickel sulfate aqueous solution is adjusted to, for example, about 7.8 to 8.5, preferably about 8.0. By the neutralization treatment using the neutralizing agent, nickel hydroxide is generated from the nickel sulfate aqueous solution and a post-neutralization slurry containing the nickel hydroxide is obtained.

### (Nickel Sulfate Aqueous Solution)

Herein, the nickel sulfate aqueous solution used in the raw material is not particularly limited, but a sulfuric acid solution obtained by leaching nickel can be used.

For example, it is possible to use a nickel sulfate aqueous solution obtained by dissolving a nickel-containing material such as an industrial intermediate consisting of one or a plurality of mixtures selected from nickel and cobalt mixed sulfide, coarse nickel sulfate, nickel sulfide, and the like, or scraps of nickel metal, with sulfuric acid to obtain a nickel leachate, subjecting the nickel leachate to a purification step such as a solvent extraction method, an ion exchange method, or neutralization to remove impurity elements.

Incidentally, the concentration of nickel in the nickel sulfate aqueous solution is roughly 100 g/L to 150 g/L and is preferably set to a value around 120 g/L, from the viewpoint that the treatment is performed in an appropriate facility scale by suppressing an excessively large increase in solubility or liquid amount.

### (Neutralizing Agent)

As the neutralizing agent, slaked lime (calcium hydroxide) can be used. Incidentally, the slaked lime is preferably used in the form of a slurry. Specifically, as the slaked lime, commercially available products for industrial use can be used, and there is no particular limitation. For example, commercially available slaked lime is adjusted using water to have a slurry concentration of about 150 g/L and used.

Incidentally, in the case of using a calcium compound as the neutralizing agent, although not limited to slaked lime, for example, calcium carbonate or the like can also be used.

Further, as the neutralizing agent, sodium hydroxide can also be used. As the sodium hydroxide, commercially available products for industrial use can be used, and there is no particular limitation. Further, as the sodium hydroxide as the neutralizing agent, from the viewpoint of having favorable conveying properties and easily adjusting the added amount, the sodium hydroxide is preferably used in the form of an aqueous solution.

Other than the sodium hydroxide, water-soluble alkali such as potassium hydroxide, and soluble alkali such as magnesium hydroxide or magnesium oxide may be used. These are preferable from the viewpoint that handling is easier because, for example, time and effort for forming a slurry can be reduced and the amount of sediment generated is reduced.

In the first step, the reaction temperature of the neutralization reaction is preferably set to about 40°C to 60°C and more preferably about 50°C, and with this range, thermal energy for heating in the previous or next step is not wasteful, and the treatment can be more efficiently performed.

### [Second Step]

In the second step, a complex-forming reaction of nickel is caused using the post-neutralization slurry containing nickel hydroxide obtained in the first step, thereby obtaining a solution of a nickel ammine complex. At this time, it is characterized that an ammonium sulfate aqueous solution is used at the time of the complex-forming reaction of nickel, and the ammonium sulfate aqueous solution is added to the post-neutralization slurry to obtain a solution of a nickel sulfate ammine complex as a post-complexation slurry.

In this way, by using the ammonium sulfate aqueous solution when a nickel ammine complex is generated, as compared to the case of the related art where the complex-forming reaction is performed using ammonia gas or ammonia water, facility cost and working environment can be improved, and a high-quality nickel powder can be efficiently manufactured.

Incidentally, the post-complexation slurry is a slurry obtained by mixing a nickel sulfate ammine complex and a gypsum slurry in the case of using slaked lime as a neutralizing agent in the first step and is a slurry of a nickel sulfate ammine complex in the case of using sodium hydroxide as a neutralizing agent.

As the ammonium sulfate aqueous solution, those having an ammonium sulfate concentration of about 200 g/L to 500 g/L are preferably used, and those having an ammonium sulfate concentration of about 400 g/L are more preferably used. In the case of an aqueous solution having an ammonium sulfate concentration of less than 200 g/L, nickel hydroxide in the post-neutralization slurry cannot be completely dissolved in some cases, and a double salt of nickel may be precipitated. Further, in the case of an aqueous solution having a concentration of more than 500 g/L, ammonium sulfate may be precipitated beyond the solubility after the treatment in the reduction step of the subsequent step.

The reaction temperature of the complex-forming reaction in the second step is preferably about 40°C to 90°C and more preferably about 60°C to 80°C. When the reaction temperature is lower than 40°C, the reaction speed is slow, which is difficult to industrially apply; on the other hand, even when the reaction temperature is higher than 90°C, the reaction speed is not changed, and the loss of energy increases.

Herein, in the second step, when the complex-forming reaction is caused using the ammonium sulfate aqueous solution, it is preferable that an ammonium sulfate aqueous solution as a post-reduction solution obtained in the reduction step described later is recovered and repeatedly used. In this way, by repeatedly reusing the ammonium sulfate aqueous solution obtained in the reduction step, nickel powder can be manufactured by the treatment that is more effective in terms of cost and industrial aspect.

Incidentally, at the time of start-up of process or in a case where the repeatedly used amount is insufficient due to a change in ammonia balance according to continuous operations, one newly prepared from a separately prepared reagent or the like as described in the related art may be complementarily used.

### [Third Step]

A step for solid-liquid separating a post-complexation slurry containing the nickel ammine complex aqueous solution generated by the complex-forming reaction in the second step can be provided as a third step, although this is not essential aspect.

For example, in the case of using slaked lime as a neutralizing agent in the first step, as described above, the post-complexation slurry obtained in the second step is a slurry composed of a solution having a nickel sulfate ammine complex and a post-complexation sediment. The post-complexation sediment is a neutralized sediment mainly containing a sulfate radical derived from nickel sulfate as a raw material, such as gypsum based on slaked lime as a neutralizing agent. Therefore, by providing the step for subjecting the post-complexation slurry to a solid-liquid separation treatment as a third step, a nickel ammine complex aqueous solution from which the sediment is separated and removed can be recovered, and the nickel ammine complex aqueous solution in which such impurities are reduced can be supplied to the next step. In this way, it can be suppressed that sulfur or the like is get into and contained in the nickel powder generated in the reduction step, and thus quality can be further improved.

The method for solid-liquid separation is not particularly limited. For example, filtration under reduced pressure using a tank filter, filtration under pressure using a filter press, and the like are exemplified, and separation by decantation may be performed before filtration using those filters.

Incidentally, in the case of using soluble alkali such as sodium hydroxide or magnesium oxide as a neutralizing agent in the first step, a neutralized sediment such as gypsum is not generated. Therefore, the third step for the solid-liquid separation treatment is not necessarily provided. However, since hydroxide composed of other impurity components is generated by neutralization using those neutralizing agents in some cases, from the viewpoint of maintaining or improving the quality of the nickel powder generated in the reduction step, it is preferable that the solid-liquid separation treatment is performed to reliably supply only the nickel ammine complex aqueous solution to the reduction step.

### [Reduction step]

In the reduction step, the hydrogen reduction is performed by bringing hydrogen gas into contact with the obtained nickel ammine complex aqueous solution, thereby generating nickel powder. Specifically, first, the nickel ammine complex aqueous solution is charged in a reaction container such as a reaction container for high temperature and high pressure, hydrogen gas for reduction is continuously supplied under the conditions of a predetermined temperature and a predetermined pressure to cause hydrogen reduction, thereby generating a slurry composed of the nickel powder and the ammonium sulfate aqueous solution as a post-reduction solution.

The reaction temperature in the reduction step is not particularly limited, but is preferably about 130°C to 250°C and more preferably about 150°C to 200°C. When the reaction temperature is lower than 130°C, reduction efficiency may be degraded; on the other hand, even when the reaction temperature is higher than 250°C, the reaction is not affected, and the loss of thermal energy increases.

Further, the pressure condition inside the reaction container at the time of the reaction is not particularly limited, but is preferably about 1.0 MPa to 5.0 MPa and more preferably about 2.0 MPa to 4.0 MPa. When the internal pressure is less than 1.0 MPa, reduction efficiency may be degraded; on the other hand, even when the internal pressure is more than 5.0 MPa, the reaction is not affected, and the loss of hydrogen gas increases.

Further, in the hydrogen reduction treatment in the reduction step, it is preferable to add the nickel powder as seed crystals to the nickel ammine complex aqueous solution contained in the reaction container. By performing the hydrogen reduction treatment in a state of the seed crystals being added in this way, the reduction rate to the metallic nickel can be increased, and the particle size of the nickel powder thus obtained can be controlled.

Specifically, as the nickel powder added as seed crystals, for example, those having an average particle size of about 0.1 µm to 300 µm can be used. Further, those having a particle size of about 10 µm to 200 µm are more preferably used. When the particle size of the nickel powder as seed crystals is less than 0.1 µm, the nickel powder thus obtained becomes too fine, so that the effect of the nickel powder as seed crystals may not be exhibited. On the other hand, when the particle size of the nickel powder as seed crystals is more than 300 µm, the nickel powder becomes coarse, so that the nickel powder is likely to be economically disadvantaged.

Further, as the nickel powder as seed crystals, a commercially available nickel powder can be used, and nickel powder chemically precipitated by a known method can be classified and used. Furthermore, the nickel powder manufactured by the manufacturing method may be repeatedly used. Incidentally, the nickel powder as seed crystals may be continuously supplied to a reaction container by using a supply device such as a slurry pump along with the nickel ammine complex aqueous solution as a raw material.

Further, in the hydrogen reduction treatment in the reduction step, it is preferable to add a dispersant to the nickel ammine complex aqueous solution. By performing the hydrogen reduction treatment by adding a dispersant in this way, the reduction rate to metallic nickel can be increased, and the surface of nickel powder thus obtained can be further smoothed. Further, aggregation or the like is prevented, and thus nickel powder having a nearly homogeneous particle size can be manufactured.

Specifically, the dispersant is not particularly limited, but a polymer having an anionic functional group such as sodium polyacrylate or a polymer having a non-ionic functional group such as polyethylene glycol or polyvinyl alcohol can be used.

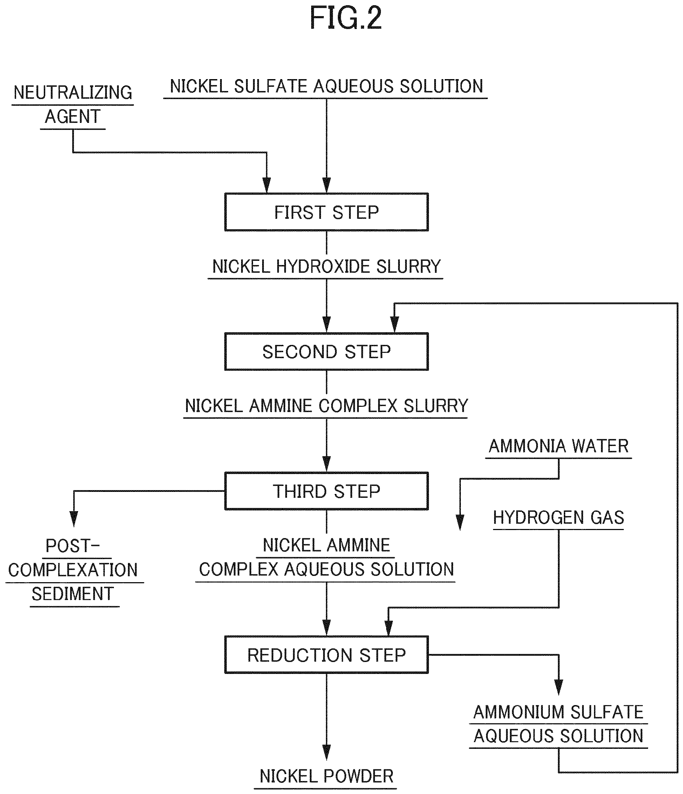

Herein, in the hydrogen reduction treatment in the reduction step, it is preferable to add ammonia water to the nickel ammine complex aqueous solution. In this way, by adding ammonia water to the nickel ammine complex aqueous solution and subjecting the aqueous solution to the hydrogen reduction treatment, the reduction rate of nickel can be increased. Specifically, Fig. 2 is a flow diagram of a manufacturing method illustrating an aspect in which ammonia water is added to a nickel ammine complex aqueous solution and the nickel ammine complex aqueous solution is subjected to a hydrogen reduction treatment.

It is known that when the nickel ammine complex aqueous solution is subjected to the reduction treatment by using hydrogen gas, the pH of a reduced solution (post-reduction liquid) is gradually decreased. The present inventors have found that, due to such a decrease in pH of the post-reduction liquid, the generated nickel powder is dissolved again to decrease the nickel reduction rate. From this, by adding ammonia water to the nickel ammine complex aqueous solution and then subjecting the aqueous solution to the hydrogen reduction treatment, a decrease in pH of the post-reduction liquid can be suppressed, and a decrease in nickel reduction rate, that is, a decrease in recovery amount of the nickel powder can be suppressed.

Further, by setting the amount of ammonia water added to small, nickel powder can be manufactured by an efficient treatment without time and effort and cost being increased. Incidentally, it is preferable that the amount of ammonia water added is set such that the concentration of ammonia in the solution is, for example, about 1 g/L to 10 g/L. When the concentration of ammonia in the solution is less than 1 g/L, the effect of suppressing a decrease in nickel powder recovery amount is small; on the other hand, when the ammonia water is added at a rate exceeding 10 g/L, the loss of the reagent is increased without the effect being improved any more.

### (Regarding Taking Out of Nickel Powder)

The reacted slurry in the reaction container which is obtained in the reduction step is discharged, for example, to a depressurized tank and subjected to solid-liquid separation, and thus the nickel powder is recovered and an ammonium sulfate aqueous solution as a post-reduction solution is taken out. The ammonium sulfate aqueous solution taken out here is, as described above, preferably reused as the ammonium sulfate aqueous solution for the complex-forming reaction in the second step. Specifically, the taken-out ammonium sulfate aqueous solution is circulated and added to the post-neutralization slurry.

In the related art, upon recovering nickel, nickel needs to be recovered from an unreacted nickel ammine complex aqueous solution remaining in the ammonium sulfate aqueous solution as a post-reduction solution. Therefore, at a stage prior to the recovery treatment of ammonium sulfate or the treatment of recovering ammonia water from ammonium sulfate, the treatment of recovering nickel has to be performed, and thus a problem arises in that facility cost or operation cost is increased. On the other hand, by repeatedly using the total amount of the ammonium sulfate aqueous solution generated in the reduction step as a solution for complex-forming reaction in the second step, an operation of preparing a separate facility to recover nickel is not necessary, cost can be effectively reduced, and an efficient operation can be performed.

### EXAMPLES

Hereinafter, the present invention will be described in more detail by means of Examples and Comparative Examples, but the present invention is not limited to the following Examples.

### [Example 1]

### (First Step)

A nickel oxide ore was subjected to acid leaching under a high temperature and a high pressure by a known method, and then sulfuric acid was added to nickel sulfide obtained by subjecting a nickel leachate to a sulfuration treatment while the liquid temperature was maintained to 50°C such that the nickel sulfide was dissolved to have a nickel concentration of 120 g/L, thereby obtaining a nickel sulfate aqueous solution. 1 L of the obtained nickel sulfate aqueous solution was separated, a slaked lime slurry having a slurry concentration of 150 g/L was added thereto, and the resultant slurry was stirred for 60 minutes and maintained such that the pH of the slurry would be 8.0, thereby obtaining a post-neutralization slurry. Incidentally, the final amount of the slaked lime slurry added was 1.26 L.

### (Second Step)

1.0 L of ammonium sulfate aqueous solution having a concentration of 1240 g/L was added to the post-neutralization slurry containing nickel hydroxide generated in the first step. Incidentally, the concentration of ammonium sulfate added in the post-neutralization slurry was 400 g/L. Subsequently, stirring was continued for 1 hour while the temperature of the aqueous solution was maintained to 80°C, and the nickel hydroxide and ammonium sulfate in the aqueous solution was reacted with each other to generate a nickel ammine complex. According to this, a post-complexation slurry containing the nickel ammine complex and a gypsum slurry was obtained.

### (Third Step)

Next, the post-complexation slurry obtained in the second step was solid-liquid separated using Nutsche and filter paper. According to this, 2.9 L of nickel ammine complex aqueous solution having a nickel concentration of 41 g/L was obtained as a filtrate.

### (Reduction step)

Next, 1 L of the obtained nickel ammine complex aqueous solution was charged in a high temperature and high pressure reaction container, 40 g of nickel powder separately prepared as seed crystals and sodium polyacrylate as a dispersant were added such that the concentration would be 0.17 g/L, the temperature was increased to 185°C, and the reaction was performed for 1 hour by supplying hydrogen gas under stirring under the condition that the internal pressure was maintained to 3.5 MPa.

After completion of the reaction, the reacted slurry was taken out from the reaction container, the generated nickel powder was recovered by solid-liquid separation, and the quantity thereof was measured. As a result, it was confirmed that 90% of nickel contained in the supplied nickel ammine complex aqueous solution can be recovered as a metallic nickel powder.

### [Example 2]

### (First Step)

Similarly to Example 1, 1 L of nickel sulfate aqueous solution which is dissolved under the condition of a reaction temperature of 50°C such that the nickel concentration would be 120 g/L was prepared. Then, 810 mL of sodium hydroxide aqueous solution having a concentration of 200 g/L was added to the nickel sulfate aqueous solution and mixed to obtain a post-neutralization slurry having a pH of 8.2.

### (Second Step)

To the post-neutralization slurry containing nickel hydroxide generated in the first step, 400 g of ammonium sulfate aqueous solution and 207 g of nickel hydroxide (in terms of Dry) obtained in the first step and water were added so that the total liquid amount was adjusted to 1000 mL. Subsequently, while the temperature of the aqueous solution after the adjustment was maintained to 80°C, stirring was continued for 1 hour, thereby generating a nickel ammine complex aqueous solution in a state in which the total amount of nickel hydroxide and ammonium sulfate was dissolved.

### (Third Step)

In the aforementioned first step, since sodium hydroxide was used as a neutralizing agent, sediment was not generated in the nickel ammine complex aqueous solution discharged from the second step. Therefore, the nickel ammine complex aqueous solution was transferred to the reduction step without providing the third step in which the solid-liquid separation is performed.

### (Reduction step)

Next, 1 L of the obtained nickel ammine complex aqueous solution was charged in a high temperature and high pressure reaction container, 40 g of nickel powder separately prepared as seed crystals and sodium polyacrylate as a dispersant were added such that the concentration would be 0.17 g/L, the temperature was increased to 185°C, and the reaction was performed for 1 hour by supplying hydrogen gas under stirring under the condition that the internal pressure was maintained to 3.5 MPa.

After completion of the reaction, the reacted slurry was taken out from the reaction container, the generated nickel powder was recovered by solid-liquid separation, and the quantity thereof was measured. As a result, it was confirmed that 95% of nickel contained in the supplied nickel ammine complex aqueous solution can be recovered as a metallic nickel powder.

### [Example 3]

The treatment from the first step to the third step was performed using the same method as in Example 1 to obtain 1 L of nickel ammine complex aqueous solution.

Subsequently, 1 L of the obtained nickel ammine complex aqueous solution was charged in a high temperature and high pressure reaction container, and similarly to the reduction step of Example 1, the reaction was performed for 1 hour by supplying hydrogen gas under the conditions including a temperature of 185°C and an internal pressure of 3.5 MPa. At this time, 11.3 g of nickel powder as seed crystals and 0.5 g/L of sodium polyacrylate as a dispersant were added to perform the reaction. Incidentally, the pH of the post-reduction liquid was decreased to 3.8.

After completion of the reaction, the reacted slurry was taken out from the reaction container, the generated nickel powder was recovered by solid-liquid separation, and the quantity thereof was measured. As a result, it was confirmed that 97.7% of nickel contained in the supplied nickel ammine complex aqueous solution can be recovered as a metallic nickel powder.

### [Example 4]

The treatment from the first step to the third step was performed using the same method as in Example 3 to obtain 1 L of nickel ammine complex aqueous solution.

Subsequently, 15 mL of ammonia water having a concentration of 25% was added to the obtained nickel ammine complex aqueous solution, and the aqueous solution thereof was charged in a high temperature and high pressure reaction container. Then, similarly to the reduction step of Example 3, 11.3 g of nickel powder as seed crystals and 0.5 g/L of sodium polyacrylate as a dispersant was added and the reaction was performed for 1 hour by supplying hydrogen gas under the conditions including a temperature of 185°C and an internal pressure of 3.5 MPa. Incidentally, the pH of the post-reduction liquid was 7.7.

After completion of the reaction, the reacted slurry was taken out from the reaction container, the generated nickel powder was recovered by solid-liquid separation, and the quantity thereof was measured. As a result, it was confirmed that 99.3% of nickel contained in the supplied nickel ammine complex aqueous solution can be recovered as a metallic nickel powder.

Incidentally, from the comparison with the result of Example 3, it was confirmed that the nickel reduction rate is improved by adding a small amount of ammonia to the nickel ammine complex aqueous solution as a target for the hydrogen reduction to suppress a decrease in pH.

## Claims

1. A nickel powder manufacturing method, the method comprising:
a first step for generating a post-neutralization slurry containing nickel hydroxide by mixing a nickel sulfate aqueous solution and a neutralizing agent;
a second step for causing a complex-forming reaction by mixing an ammonium sulfate aqueous solution with the post-neutralization slurry obtained in the first step and obtaining a post-complexation slurry containing a nickel ammine complex aqueous solution; and
a reduction step for obtaining nickel powder and a post-reduction solution by bringing hydrogen gas into contact with the nickel ammine complex aqueous solution obtained in the second step.

2. The nickel powder manufacturing method according to claim 1, wherein in the second step, the post-reduction solution obtained in the reduction step is used as the ammonium sulfate aqueous solution to be mixed with the post-neutralization slurry.

3. The nickel powder manufacturing method according to claim 1 or 2, the method further comprising a third step for subjecting the post-complexation slurry obtained in the second step to solid-liquid separation into a nickel ammine complex aqueous solution and a post-complexation sediment and supplying the nickel ammine complex aqueous solution to the reduction step.

4. The nickel powder manufacturing method according to any one of claims 1 to 3, wherein in the first step, slaked lime and/or sodium hydroxide is used as the neutralizing agent.

5. The nickel powder manufacturing method according to any one of claims 1 to 4, wherein in the reduction step, the nickel powder is obtained by adding ammonia water to the nickel ammine complex aqueous solution and then bringing the hydrogen gas into contact with the nickel ammine complex aqueous solution.
